# EUROPEAN PATENT APPLICATION

(11) **EP 4 627 982 A1**
(43) Date of publication of application: **08.10.2025**
(21) Application number: 25167665.6
(22) Date of filing: 01.04.2025
(51) Int. Cl.: A47J 37/07

(54) **ELECTRIC BARBECUE, IN PARTICULAR BUILT-IN OR TABLETOP ELECTRIC BARBECUE SUITABLE FOR INDOOR OR OUTDOOR USE**

(30) Priority: 02.04.2024 IT 202400007240
(71) Applicant: SMEG S.p.A., 42016 Guastalla (RE) (IT)
(72) Inventor: DALL'OGLIO, Alberto, 42016 GUASTALLA (RE) (IT); MASTILOVIC, Nebojsa, 42016 GUASTALLA (RE) (IT)
(74) Representative: Studio Torta S.p.A.

(57) **Abstract**

An electric barbecue, preferably built-in or tabletop and suitable for indoor or outdoor use; wherein the electric barbecue comprises: a grill or several grills placed side by side, each grill comprising an outer cooking face and an inner face; at the inner face of each grill a heating module is provided; each heating module comprising an electric coil heating element, independently controlled by a corresponding control device and a temperature sensor configured to measure the grill temperature; a box structure that removably supports the grill or grills at an upper opening; wherein each heating module is movably coupled to the box structure to move from a heating position of the corresponding grill in which it is at the inner face of the grill when supported by the box structure, to a barbecue cleaning position, wherein, once the corresponding grill is removed, it does not obstruct access to the box structure.

## Description

### CROSS-REFERENCE TO RELATED APPLICATIONS

This patent application claims priority from Italian patent application no. 102024000007240 filed on April 2, 2024, the entire disclosure of which is incorporated herein by reference.

### Technical field

The technical field of reference for the present invention is the field of electric barbecues, in particular built-in or tabletop electric barbecues suitable for use not only indoors but also outdoors. By electric barbecues we mean devices for cooking food comprising at least one cooking grill which is heated by means of an electric heating element. The electric heating of the grill, and the fact that the barbecue can also be used outdoors in built-in or tabletop mode, give rise to particular problems with respect to the common gas barbecues; the present invention will address one of these problem, offering an innovative solution.

### State of the art

Electric barbecues are currently known, also suitable for outdoor use in built-in or tabletop mode. Said barbecues, like all the known barbecues, comprise a grill or several grills positioned side by side to form a cooking surface. Each grill therefore comprises an outer cooking face and an opposite inner face. A particular feature of electric barbecues is the fact that at the inner face of each grill there is an electric heating element. If several grills are present, it is known that the corresponding electric heating elements can be controlled independently. Operation of the electric heating elements is controlled by the user via control devices, for example knobs or capacitive touch sensors. Usually each electric heating element is independent and controlled by a corresponding control. To control the temperature of the grills, so as to know when the desired temperature has been reached and so that it remains constant over time at the value set by the user, the barbecue is commonly provided with a probe or temperature sensor for each grill. In particular, the sensor detects when the grill has reached the set cooking temperature (this signal is also communicated to the user) and in turn controls the electric heating element (by means of electronics that connect the sensor, the heating element and the control device) so that it maintains the set temperature over time (for example with alternating on-off cycles of the heating element).

WO2018081766A1 describes an electric barbecue with two grills in which each grill is provided with an electric heating element and a temperature sensor configured as previously described. According to WO2018081766A1 the sensor is in direct contact with the corresponding grill and is fixed integral with the frame that supports the heating elements and, in a liftable manner, the grills.

### Description of the invention

Based on said known technique, an object of the present invention is to provide an electric barbecue, in particular a built-in or tabletop electric barbecue usable outdoors or indoors, which has innovative characteristics with respect to the analogous known electric barbecues, for example with the respect to the electric barbecue described in WO2018081766A1.

The starting point for the present invention is therefore an electric barbecue comprising a box structure (preferably rectangular shaped but it could also be circular or have other shapes) that removably supports (preferably by means of simple vertical lifting) at an upper opening a grill or several grills positioned side by side. Each grill comprises an outer cooking face and an inner face facing the inside of the box structure. At the inner face of each grill a heating module is provided which comprises a coil heating element and a temperature sensor configured to measure the temperature of the grill. Integration in one module of the heating element and the temperature sensor represents in itself an innovation in this technical field of built-in or tabletop electric barbecues. Each electric heating element is independently controlled by a corresponding control device settable by the user to select the desired cooking temperature. The temperature sensor indicates to the user that the desired cooking temperature has been reached and furthermore in turn controls (by means of suitable electronics) the corresponding electric heating element to maintain the cooking temperature as constant as possible over time. As known, the inner face of the grill can comprise housing channels for housing the coil heating element that runs substantially along the entire inner face of the grill (if the grill is of open type, the coil is obviously not positioned at the openings).

In addition to integrating the heating element and temperature sensor in one module, according to the present invention each heating module is further characterized in an innovative manner because it is coupled to the box structure not in a fixed static way but in a movable way to identify at least two positions, namely to switch from:
- a heating position of the corresponding grill in which the module is substantially horizontal (namely it can be contained in a substantially horizontal plane parallel to the bottom of the box structure) at the inner face of the corresponding grill supported by the box structure; to
- a barbecue cleaning position in which, once the corresponding grill has been lifted off the box structure, the module is no longer in the substantially horizontal position but, while remaining constrained to the box structure, it is in a position such as not to obstruct access to the box structure.

According to a preferred embodiment of the present invention, the switch from the heating position to the cleaning position of the barbecue is carried out by rotation of the heating module around an axis passing through an edge of the opening of the box structure. According to this example, therefore, each heating module is rotatably coupled with respect to the box structure so as to move from the substantially horizontal heating position to a position in which it is tilting (namely it can be inside a plane inclined with respect to the bottom of the box structure) upwards and towards the outside of the box structure. According to this example, preferably, in structural terms each heating module comprises a hinge coupling to the box structure, in which said hinge supports the corresponding electric heating element and the corresponding temperature sensor and represents the inlet port to the box structure for the electric heating element and the sensor (which on the outside of the box structure are connected to their electronics).

Preferably, the temperature sensor is made in the form of a cylindrical probe which comprises an outer casing passing through the hinge with a portion on the outside of the box structure and a portion inside the box structure. The portion of the probe inside the box structure comprises a tip preferably made of ceramic material. According to another important aspect of the present invention, in the heating position with the grill in position there is a distance D between the tip of the outer casing and the nearest portion of the inner face of the corresponding grill. There is therefore no contact between the probe and the corresponding grill. Since the grill is removable, direct contact can damage the probe during positioning or lifting of the grill.

Preferably, the probe comprises an inner casing housed in the outer casing and a wire temperature sensor with one end housed in the inner casing. In this example, preferably inside the outer casing there is a distance d between the inner casing and the tip of the outer casing. Therefore between the end of the wire temperature sensor and the nearest portion of the inner face of the corresponding grill there is at least a distance equal to the sum of the distance D between the tip of the outer casing and the nearest portion of the inner face of the corresponding grill and distance d between the inner casing and the tip of the outer casing.

Preferably, the control device of each grill is a rotary knob. In said example, preferably, each rotary knob is provided with a backlit LED ring configured to switch from a first colour indicating heating of the grill to a second colour when the temperature sensor confirms that the desired temperature has been reached.

Preferably, for each grill a grease collection pan is provided (for example made of dishwasher-safe stainless steel) housed in the box structure; in which preferably each grease collection pan only rests in the box structure and can therefore be removed by vertical lifting. Said lifting is facilitated by setting the heating module to the tilting barbecue cleaning position.

### List of figures

Further characteristics and advantages of the present invention will appear clear from the following description that refers to a non-limiting embodiment example, with reference to the figures of the attached drawings, in which:
- figure 1 is a schematic view of an embodiment example of a built-in or tabletop electric barbecue according to the present invention;
- figure 2 shows the barbecue of figure 1 in which a grill has been removed to show some elements positioned below the grills;
- figure 3 shows a vertical exploded view of some elements of the barbecue of figure 1, namely a grill, its heating module which in use is located at the inner face of the grill and a grease collection pan which in use is positioned below the heating module facing the inner face of the grill;
- figure 4 shows how the heating module collaborates with the inner face of the grill during use of the barbecue;
- figures 5 and 6 show details of the heating module, in particular figures 5 and 6 show an embodiment of the coupling hinge of the heating module coupling to the box structure of the barbecue and an embodiment of the temperature sensor;
- figure 7 shows the barbecue of figure 1 in which the grills have been removed and the heating modules tilted upwards to allow the user to access the inside of the box structure of the barbecue, for example to remove the grease collection pans.

### Disclosure of an embodiment of the invention

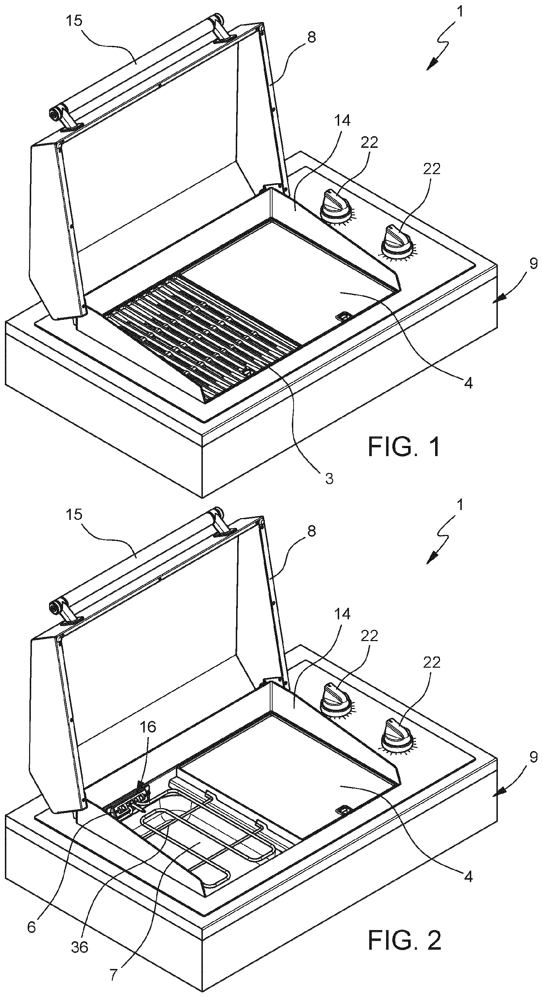

With reference to the attached figures, figure 1 shows a schematic view of an embodiment example of an electric barbecue 1 according to the present invention. Said barbecue, like all the barbecues of the present invention, can be used in built-in or tabletop mode. Furthermore, the barbecues of the present invention can be used not only indoors but also outdoors. Going back to the example of figure 1, the barbecue shown comprises an open grill 3 (provided with openings and a plurality of inclined surfaces to convey the grease towards the openings) and a closed grill 4 (provided with a flat outer surface without any openings) positioned side by side. Each grill 3, 4, which can be made for example of die-cast aluminium coated in non-stick material, comprises an outer cooking face 28 and an inner face 29. The grills 3, 4 are heated independently by means of corresponding electric coil heating elements 5 at the inner face 29 of each grill. Each electric heating element 5 is independently controlled by the user via corresponding control knobs 22, in this example located beside the grills 3, 4. According to this example the knobs 22 are rotary and each one is provided with a backlit LED ring 11 configured to switch from a first colour (for example red) indicating heating of the corresponding grill 3, 4 to a second colour (for example white) when the set temperature is reached. In figure 1 the reference 9 identifies a rectangular-shaped box structure which houses the electric heating elements 5 and which is provided with an upper opening where the grills 3, 4 are supported. In this example the grills 3, 4 only rest on the box structure 9 and therefore can be removed by simply lifting them vertically. The reference 14 in figure 1 identifies edges raised to form splash guards which extend from the opening of the structure 9 beyond the grills 3, 4. In the example of figure 1 there is a cover 8 provided with a handle 15 movably coupled with respect to the structure 9 to move from an opening position in which the grills 3, 4 are accessible (position shown in figure 1) and a closing position in which a closed cooking chamber is created at the grills 3, 4. The presence of two grills 3, 4 as shown in figure 1 is not a limiting characteristic for the present invention. In fact, the barbecue 1 could have only one grill (and therefore one single heating element and one single control knob), or more than two grills 3, 4 each one independent with a corresponding electric heating element and a corresponding knob.

Figure 2 shows the barbecue of figure 1 in which a grill 3 has been removed to show some elements located below it. In particular, figure 2 shows the coil heating element 5 located below the grill 3 (removed) and a grease collection pan 7 housed (only resting in this example) in the box structure 9. Although not visible, an analogous pan 7 and an analogous heating element 5 are also present below the closed grill 4 of figure 2.

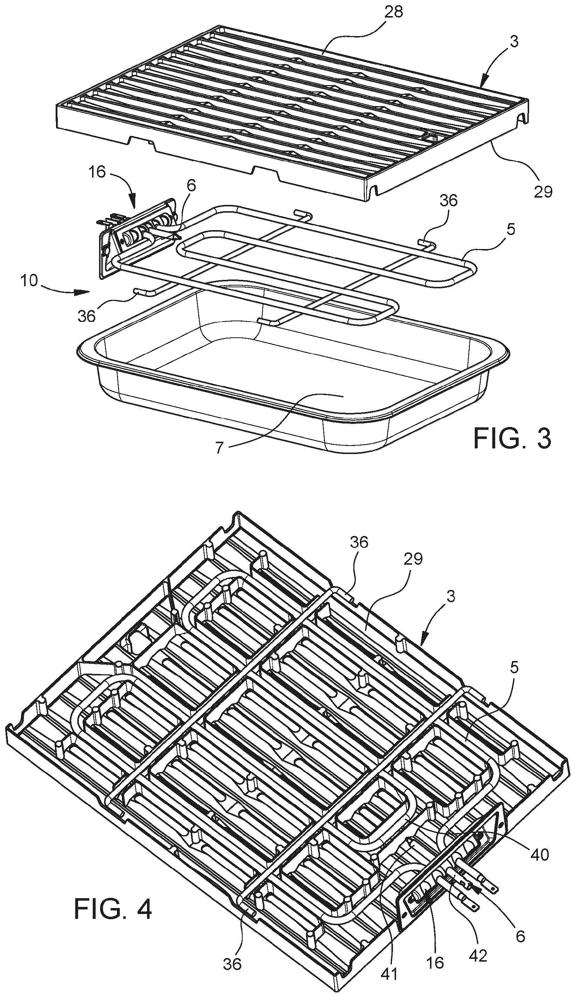

Figure 3 shows a vertical exploded drawing of some elements of the barbecue of figure 1, namely the open grill 3 with the outer face 28 and inner face 29, its electric heating element 5 which in use is located at the inner face 29 and the corresponding grease collection pan 7 which in use is located below the electric heating element 5 facing the inner face 29 of the grill 3. As can be seen, the electric heating element 5 is not a single element but forms part of a heating module 10 which furthermore comprises a hinge 16 configured to rotatably couple the electric heating element 5 to an edge of the opening of the box body 9. The heating module 10 further comprises a temperature sensor 6 which in this example is a cylindrical probe also supported by the hinge 16. The probe measures the temperature of the grill 3, indicates via the LED ring 11 that the temperature set by the user with the knob 22 has been reached and furthermore controls the resistance 5 so that said temperature is constant throughout the cooking. In this example, therefore, the electric heating element 5 and the probe 6 are integral with each other because they are both constrained to the hinge 16. Thanks to the hinge 16 the heating module 10 is rotatingly coupled with respect to the box structure 9. In the heating position, each module 10 is parallel to the bottom of the box structure 9 and at the inner face 29 of the corresponding grill 3 and in the cleaning position of the barbecue with grill removed, is tilting upwards.

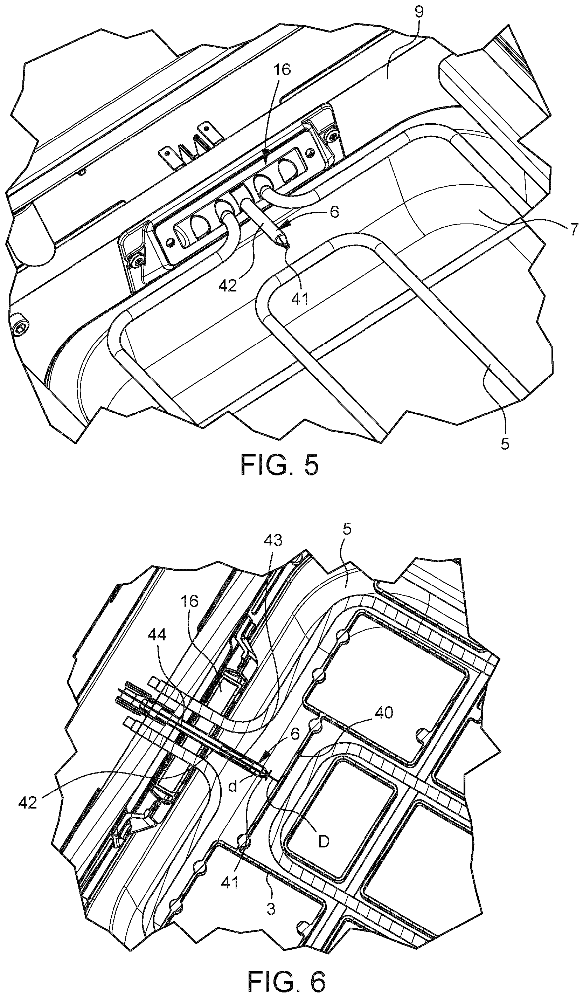

Figure 4 shows how the heating module collaborates with the inner face of the grill during use of the barbecue. Note how the inner face 29 of the grill 3 has housing channels for housing the coil 5 and a wall 40 facing without contact the tip 41 of the probe 6. In figure 5 it can be noted that the cylindrical probe 6 comprises an outer casing 42 with a portion outside the box structure 9 and a portion inside the box structure 9 on opposite sides with respect to the hinge 16.

Figure 6 shows an embodiment of the temperature sensor 6. In this example the probe 6 comprises an inner casing 43 housed in the outer casing 42 and a wire temperature sensor 44 with one end housed in the inner casing 17. In the heating position with the grill 3 in use there is a distance D between the tip 41 of the outer casing 42 and the nearest wall 40 of the grill 3. There is also a distance d inside the outer casing 42 between the inner casing 43 and the tip 41.

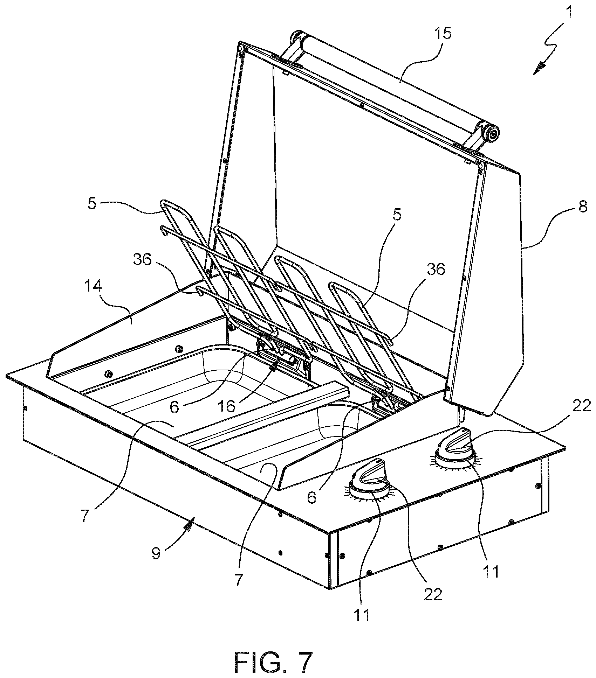

Lastly, figure 7 shows the barbecue of figure 1 in which the grills 3 4 have been removed and the heating modules 10 have been rotated around the hinges 16 to reach the position tilting upwards and allow the user to access the inside of the box structure 9 of the barbecue 1, for example to remove the grease collection pans 7. The modules are rotated manually and the hinge 16 is configured to retain the module in the inclined position. The horizontal position is maintained by means of cross bars 36 coupled to the coil which abut laterally against lateral face portions of the box structure and against partitions arranged in the box structure between the grease collection pans.

It is evident that modifications and variations can be made to the invention described here with respect to the example shown in the figures. The main aspect of the present invention lies in the fact that the heating element and temperature sensor have been integrated in one module and said module has been made movable with respect to the box structure to allow the module to assume, when required, a position such as to enable the user to easily access the inside of the box body. If, on the contrary, the coupling between the heating module and box body were fixed, the heating element would always be horizontal above the pans, not allowing easy removal and in general cleaning of the barbecue.

## Claims

1. An electric barbecue (1), in particular a built-in or tabletop electric barbecue and suitable for indoor or outdoor use; wherein the electric barbecue (1) comprises:
- a grill (3, 4) or several grills (3, 4) placed side by side, each grill (3, 4) comprising an outer cooking face (28) and an inner face (29);
- at the inner face (29) of each grill (3, 4) a heating module is provided; each heating module comprising an electric coil heating element (5), independently controlled by a corresponding user-settable control device to select the desired cooking temperature, and a temperature sensor configured to measure the grill temperature;
- a box structure (9) that removably supports the grill (3, 4) or grills at an upper opening;
wherein
each heating module is movably coupled to the box structure (9) to move from a heating position, wherein it is at the inner face (29) of the corresponding grille (3, 4) supported by the box structure (9), to a barbecue cleaning position, wherein, once the corresponding grille (3, 4) is removed, it does not obstruct access to the box structure (9).

2. The electric barbecue (1) as claimed in claim 1, wherein each heating module is rotatably coupled with respect to the box structure (9) in such a way that in the heating position each module is parallel to the inner face (29) of the corresponding grill and in the barbecue cleaning position it is tilted upwards.

3. The electric barbecue (1) as claimed in any one of the preceding claims, wherein each heating module comprises a hinge (16) coupling to the box structure (9), wherein through the hinge the corresponding electrical resistance and temperature sensor enter the box structure.

4. The electric barbecue (1) as claimed in claim 3, wherein the temperature sensor is made in the form of a cylindrical probe (6) comprising an outer casing (42) having a portion outside the box structure (9) and a portion inside the box structure (9) on opposite sides with respect to the hinge (16); the portion of the probe (6) inside the box structure (9) comprising a tip (41) preferably made of a ceramic material; in the heating position, a distance (D) being present between the tip (41) of the outer casing (42) and the nearest portion of the inner face (29) of the corresponding grill (3).

5. The electric barbecue (1) as claimed in claim 4, wherein the probe (6) comprises an inner casing (43) housed in the outer casing (42) and a wire temperature sensor (44) with one end housed in the inner casing (43).

6. The electric barbecue (1) as claimed in claim 5, wherein inside the outer casing (42) there is a distance (d) between the inner casing (43) and the tip (41) of the outer casing (42).

7. The electric barbecue (1) as claimed in any one of the preceding claims, wherein each control device is a rotary knob (22).

8. The electric barbecue (1) as claimed in claim 7, wherein each rotary knob (22) is provided with a backlit LED ring (11).

9. The electric barbecue (1) as claimed in claim 8, wherein the backlit ring (11) is configured to switch from a first grill heating colour (3, 4) to a second colour when the set temperature is reached.

10. The electric barbecue (1) as claimed in any one of the preceding claims, wherein each grill (3, 4) is liftable from the box structure (9).

11. The electric barbecue (1) as claimed in any one of the preceding claims, wherein for each grill (3, 4) there is a grease collection pan (7) housed in the box structure; preferably each grease collection pan (7) is made of dishwasher-safe stainless steel.

12. The electric barbecue (1) as claimed in claim 11, wherein each grease pan (7) is liftable from the box structure (9).
